# EUROPEAN PATENT APPLICATION

(11) **EP 1 100 141 A1**
(43) Date of publication of application: **16.05.2001**
(21) Application number: 00124536.4
(22) Date of filing: 09.11.2000
(51) Int. Cl.: H01M 10/34, H01M 4/32, H01M 4/24

(54) **Nickel-metal hydride storage battery**

(30) Priority: 12.11.1999 JP 32271699
(71) Applicant: Matsushita Electric Industrial Co., Ltd., Kadoma-shi, Osaka 571-8501 (JP); TOYOTA JIDOSHA KABUSHIKI KAISHA, Aichi-ken 471-8571 (JP)
(72) Inventor: Hayashi, Kiyoshi, Nishitakashicho, Toyohashi-shi, Aichi (JP); Morishita, Nobuyasu, Toyohashi-shi, Aichi 441-8104 (JP); Ikoma, Munehisa, Toyohashi-shi, Aichi 440-0814 (JP)
(74) Representative: Leson, Thomas Johannes Alois, Dipl.-Ing.

(57) **Abstract**

The present invention is to provide a nickel-metal hydride storage battery comprising a positive electrode (1) mainly composed of nickel hydroxide, a negative electrode (2) mainly composed of a hydrogen storage alloy powder electrochemically absorbing and desorbing hydrogen. a separator (3) and an alkaline electrolyte, wherein zinc and rare earth element are contained in at least one selected from the group consisting of the positive electrode, the separator and the electrolyte. Hence, the charge efficiency of nickel hydroxide can be improved at a high ambient temperature, and furthermore, the deterioration of the negative electrode due to oxidation can be suppressed, thereby enabling a provision of a nickel-metal hydride storage battery with a longer cycle life.

## Description

### BACKGROUND OF THE INVENTION

This invention relates to improvements of a nickel-metal hydride storage battery.

With the recent explosive spread of portable information equipment such as a cellular phone, a PHS and a notebook computer, a small and lightweight secondary battery with a high-added value has been under development. Since such a secondary battery has a high energy density, there has been a strong demand for one which exhibits excellent performance as a battery even at a high ambient temperature due to heat generation by these appliances. There has been another demand for the development of a novel secondary battery with a high energy density as a power source for electric vehicles. Therefore, it is assumed that such battery will be used in a wide range of ambient temperatures.

In order to meet such demands, use of a nickel-metal hydride storage battery for electric vehicles has been investigated from the viewpoints of high energy density, great output power and safety.

However, there is a problem with a nickel-metal hydride storage battery that, during charging at a high ambient temperature, the charge capacity is drastically reduced because oxygen overvoltage at the positive electrode is extremely decreased to generate oxygen, causing charging reaction competitively to the oxygen generation reaction. Moreover, since it is difficult to exchange a battery in electric vehicles, the battery is expected to have a longer life, and it also needs to have excellent storage characteristics as it is supposed to be used outdoor. In addition, there is a problem which is common to all nickel positive electrodes that, although the energy density is high at around room temperature, it becomes low at a high ambient temperature.

The cause of this problem is that oxide generation reaction tends to occur concurrently with the charging reaction at a high ambient temperature in which nickel hydroxide is converted to nickel oxyhydroxide during charging. That is, the oxide generation reaction at the positive electrode prevents nickel hydroxide to be sufficiently converted to nickel oxyhydroxide, thereby reducing the utilization rate of nickel-metal hydride.

In order to solve these problems, the following methods have been suggested:
(1) A method to add a cadmium oxide powder, a cadmium hydroxide powder and the like into a positive electrode.
(2) A method to add cadmium inside a nickel hydroxide powder (Japanese Laid-Open Patent Publication No. Sho 61-104565).
(3) A method to add a compound comprising yttrium, indium, antimony, barium and beryllium into a positive electrode (Japanese Laid-Open Patent Publication No. Hei 6-103973).
(4) A method to add a zinc compound into a nickel positive electrode, a negative electrode and a separator (Japanese Laid-Open Patent Publication No. Hei 4-137368).
(5) A method to add yttrium and/or an yttrium compound into a negative electrode (Japanese Laid-Open Patent Publication No. Hei 6-215765).

The above-mentioned methods (1) and (2) that have been proposed conventionally improve the utilization rate of nickel hydroxide at a high ambient temperature by the presence of cadmium oxide inside or with a nickel hydroxide powder.

However, even in the case where cadmium oxide is added, the utilization rate of nickel hydroxide is 80% or so at a high ambient temperature; therefore, in order to further improve the utilization rate of nickel hydroxide at a high ambient temperature, it is necessary to increase the amount of cadmium oxide to be added inside nickel hydroxide or in a nickel positive electrode.

By increasing the amount of cadmium oxide to be added, the utilization rate of nickel hydroxide can be increased up to 90% or so at a high ambient temperature. However, it reduces the utilization rate of nickel hydroxide at around an ordinary temperature.

Meanwhile, from an environmental standpoint, attention has been given to a nickel-metal hydride storage battery containing no cadmium, which is one of heavy metals. However, by removing cadmium oxide from nickel hydroxide or a positive electrode, the utilization rate of nickel hydroxide is decreased to around 50 to 60% at a high ambient temperature. If a sealed nickel-metal hydride storage battery in which the capacity of the positive electrode is regulated by a reduced amount of the electrolyte is constituted, there is a problem that the cycle life becomes shorter due to the poisoning of the hydrogen storage alloy by cadmium.

The above method (3) is aimed at improving the utilization rate of nickel hydroxide at a high ambient temperature by adsorbing a compound of yttrium, indium, antimony or the like on the surface of a nickel hydroxide active material to increase the overvoltage of oxygen generation, which is a competitive reaction during charging at a high ambient temperature, and thereby improving the charge efficiency of nickel hydroxide to nickel oxyhydroxide.

However, mere use of this method would cause a nonuniform distribution of additives in a paste or an insufficient solving of the additives; therefore the effect which can meet the above-mentioned expectations cannot be sufficiently achieved. There has been a problem that a large amount of additive is required for obtaining an evident effect, which prevents a battery to have a higher capacity.

As to the above-mentioned methods (4) and (5), no sufficient improvements in characteristics were observed at a high ambient temperature in recent years as mentioned above (particularly at a temperature of 60 °C or higher). For this reason, even if the amount of each component was increased aimlessly, improvement in the characteristics was not observed in proportion to the increase; instead the capacity was decreased. Thus the actually usable capacity was not improved.

Therefore, in order to solve these problems, the inventors of the present invention focused their attentions to the additive which might achieve an even higher capacity and a longer service life. They have found that the concurrent use of the additives of zinc and rare earth is effective and have completed the present invention.

That is, an object of the present invention is to provide a nickel-metal hydride storage battery which is useful in improving charge efficiency at a high ambient temperature, also effective in suppressing deterioration of the negative electrode due to oxidation, and have achieved a longer service life.

### BRIEF SUMMARY OF THE INVENTION

The present invention relates to a nickel-metal hydride storage battery comprising a positive electrode mainly composed of nickel hydroxide, a negative electrode mainly composed of a hydrogen storage alloy powder electrochemically absorbing and desorbing hydrogen, a separator, and an alkaline electrolyte, wherein at least one selected from the group consisting of the positive electrode, the separator and the electrolyte contains zinc element and rare earth element.

Herein, the zinc is preferably contained in at least one state selected from the group consisting of metallic zinc, zinc hydroxide, zinc oxide, zinc sulfate, zinc carbonate and zincate ion.

The content of the zinc calculated as in the state of oxide thereof is preferably 0.01 to 10% by weight of the nickel hydroxide.

The rare earth element is preferably contained in at least one state selected from the group consisting of rare earth metal, rare earth oxide and rare earth hydroxide.

The content of the rare earth element calculated as in the state of oxide thereof is preferably 0.01 to 10% by weight of the nickel hydroxide.

The rare earth metal is preferably yttrium, erbium or ytterbium.

The electrolyte preferably contains potassium hydroxide, sodium hydroxide and lithium hydroxide.

Furthermore, the present invention also relates to a nickel-metal hydride storage battery comprising a positive electrode mainly composed of nickel hydroxide, a negative electrode mainly composed of a hydrogen storage alloy powder electrochemically absorbing and desorbing hydrogen, a separator, and an alkaline electrolyte, wherein at least one selected from the group consisting of metallic zinc, zinc hydroxide, zinc oxide, zinc sulfate and zinc carbonate; and one selected from the group consisting of rare earth metal, rare earth oxide and rare earth hydroxide is added to the negative electrode.

The content of the zinc calculated as in the state of oxide thereof is preferably 0.01 to 10% by weight of the hydrogen storage alloy.

Herein, the content of the rare earth element calculated as in the state of oxide thereof is also preferably 0.01 to 10% by weight of the hydrogen storage alloy.

The rare earth metal is preferably yttrium, erbium or ytterbium.

The separator is preferably composed of sulfonated polypropylene.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

Fig. 1 is a perspective view, partly in section. of the battery produced in an example of the present invention.

Fig. 2 is a graph illustrating the relation between each of the addition amounts of zinc and yttrium to the positive electrode, and the utilization rate of the nickel positive electrode at each temperature.

Fig. 3 is a graph illustrating the relation between each of the addition amounts of zinc and yttrium to the negative electrode, and the utilization rate of the nickel positive electrode at each temperature.

Fig. 4 is a graph illustrating the utilization rate of the positive electrode at the second charge/discharge cycle at each ambient temperature of each battery charged and discharged in Example 3.

Fig. 5 is a graph illustrating the utilization rate of the positive electrode at the second charge/discharge cycle at each ambient temperature of each battery charged and discharged in Example 4.

### DETAILED DESCRIPTION OF THE INVENTION

It has been known from the past that zinc and rare earth element have a function to improve oxygen overvoltage and each of them is added alone to the nickel positive electrode. On the other hand, according to the present invention, further effect can be obtained by concurrently adding both of zinc and rare earth element each in a less amount than that has been required in the past.

It was found that a similar effect could be achieved by adding zinc and rare earth element to a separator and/or an electrolyte. Moreover, by adding zinc and rare earth element to a hydrogen storage alloy negative electrode, a separator and an electrolyte, it is possible to coat the surface of the hydrogen storage alloy negative electrode with an oxide film of zinc and rare earth element, thereby also preventing deterioration of the hydrogen storage alloy itself due to oxidation: therefore, the cycle life of the alkaline storage battery was improved.

In addition, it was found that, even in the case where zinc and rare earth element were added to the nickel positive electrode, deterioration of the hydrogen storage alloy negative electrode was also prevented under the influence of zinc and rare earth element dissolved in the electrolyte, and swelling of the nickel positive electrode was suppressed to improve the cycle life.

As such, according to the present invention, it is possible to provide a nickel-metal hydride storage battery with a longer service life which can be used in a wider range of temperatures.

The present invention relates to a nickel-metal hydride storage battery comprising a positive electrode mainly composed of nickel hydroxide, a negative electrode mainly composed of a hydrogen storage alloy powder electrochemically absorbing and desorbing hydrogen, a separator, and an alkaline electrolyte, wherein at least one selected from the group consisting of the positive electrode, the separator and the electrolyte contains zinc and rare earth element.

First, a description will be made on zinc and rare earth element which are the most outstanding characteristics of the present invention.

Zinc may be contained in at least one state selected from the group consisting of metallic zinc, zinc hydroxide, zinc oxide, zinc sulfate, zinc carbonate and zincate ion.

Meanwhile, rare earth element may be contained in at least one state selected from the group consisting of rare earth metal, rare earth oxide and rare earth hydroxide.

Further, rare earth element may be yttrium. erbium or ytterbium, for example.

As such, in the present invention, at least one selected from the group consisting of the positive electrode, the separator and the electrolyte contains zinc and rare earth element. In other words, zinc and rare earth element are contained in one or all of the positive electrode, the separator and the electrolyte.

Therefore, the present invention also relates to a nickel-metal hydride storage battery wherein at least one selected from the group consisting of metallic zinc, zinc hydroxide, zinc oxide, zinc sulfate and zinc carbonate; and at least one selected from the group consisting of metallic zinc, zinc oxide and zinc hydroxide are contained in the separator or the electrolyte in the aforementioned nickel-metal hydride storage battery.

The total content of the zinc and the rare earth element in the nickel-metal hydride storage battery in accordance with the present invention (which is calculated as in the state of oxide thereof) is preferably 0.01 to 10% by weight of the nickel hydroxide contained in the positive electrode.

They are also preferably 0.1 to 2% by weight of the nickel oxide in the positive electrode since such amount enables the stable production of battery with high performance at lower material cost.

Although the separator in the nickel-metal hydride storage battery in accordance with the present invention is not particularly specified, it is preferably composed of sulfonated polypropylene.

Although the electrolyte in the nickel-metal hydride storage battery in accordance with the present invention is not particularly specified, it preferably contains potassium hydroxide, sodium hydroxide and lithium hydroxide.

Hereinafter, although the present invention will be described more specifically with examples, the present invention is not limited thereto.

### EXAMPLE 1

### [Preparation of Positive Electrode]

To 100 parts by weight of a spherical powder of nickel hydroxide, 5 parts by weight of a cobalt powder, 5 parts by weight of a cobalt hydroxide powder, 1 part by weight of a zinc oxide powder and 1 part by weight of a yttrium oxide powder were mixed. Namely, the content of the zinc compound and the yttrium compound was 2% by weight of the nickel hydroxide. And, the obtained mixture was kneaded with water to give a paste. The paste thus obtained was filled into a foamed nickel porous substrate, which was a support having a porosity of 95% and a surface density of 450g/cm². After being dried and compressed, it was cut into a predetermined size of 0.5 mm thickness, 35 mm width and 110 mm length, thereby preparing a nickel positive electrode having a theoretical capacity of 1,000 mAh.

### [Preparation of Negative Electrode]

To 100 parts by weight of a hydrogen storage alloy (MmNi_{3.6}Co_{0.7}Mn_{0.4}Al_{0.3}, wherein M is Mish metal), 5 parts by weight of binder (polyvinyl alcohol) was mixed. And, the obtained mixture was kneaded with water to give a paste. The paste thus formed was applied onto a punched metal sheet. After being dried and compressed, it was cut into a predetermined size of 0.4 mm thickness, 35 mm width, 160 mm length, thereby forming a hydrogen storage alloy negative electrode having a theoretical capacity of 1,600 mAh.

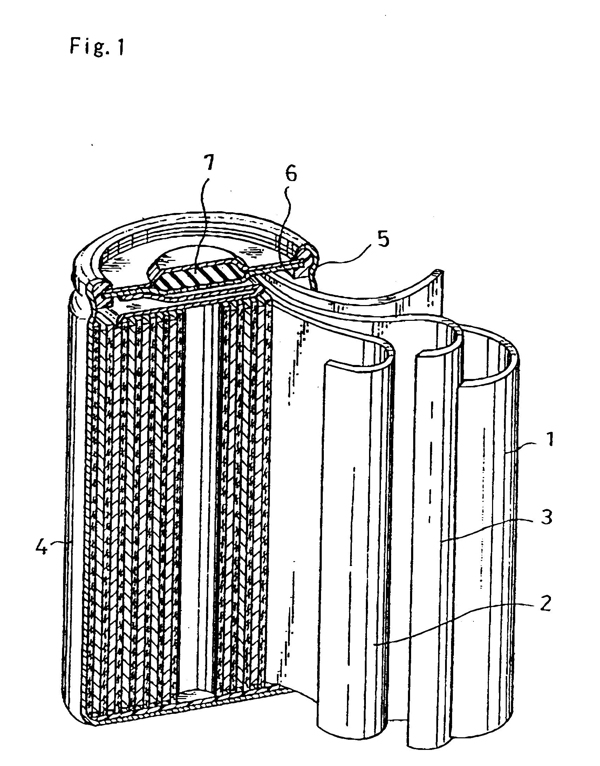

The positive electrode prepared as described above was combined with a hydrogen storage alloy negative electrode as described above to produce a battery as shown in Fig. 1 by using a separator made of a sulfonated polypropylene having a thickness of 0.2 mm. This battery is an AA-size sealed nickel-metal hydride storage battery having a theoretical capacity of 1,000 mAh of which electric capacity is regulated by the positive electrode.

A positive electrode 1, a negative electrode 2 and a separator 3 were laminated and rolled up together, and inserted into a case 4, which also served as a negative terminal. A positive electrode lead 5 provided at the positive electrode 1 was connected to a sealing plate 6, which also served as a positive terminal, and a safety valve 7 was provided at the sealing plate 6.

Into the storage battery, 2.0 cm³ of an alkaline electrolyte (an aqueous solution of KOH having a specific gravity of 1.3) was introduced, and the case 4 was sealed with the sealing plate 6. The battery thus produced was named Battery A.

A battery produced in the same manner except that only zinc was contained in the positive electrode was named Battery B. And, a battery produced in the same manner except that no zinc and yttrium were contained in the positive electrode was named Battery C.

### [Evaluation]

The utilization rate (capacity ratio) of the positive electrode were measured for each battery at an ambient temperature of -25 °C to 50 °C. First. after charging was conducted with a current of 0.1 C, which theoretically could completed the charging in 10 hours, for 15 hours, discharging was conducted with a current of 0.2 C, which theoretically could completed the discharging in 5 hours, until the voltage dropped to 1.0 V. The utilization ratio of the positive electrode was obtained as a ratio of discharge capacity (mAh)/theoretical capacity of the positive electrode (mAh).

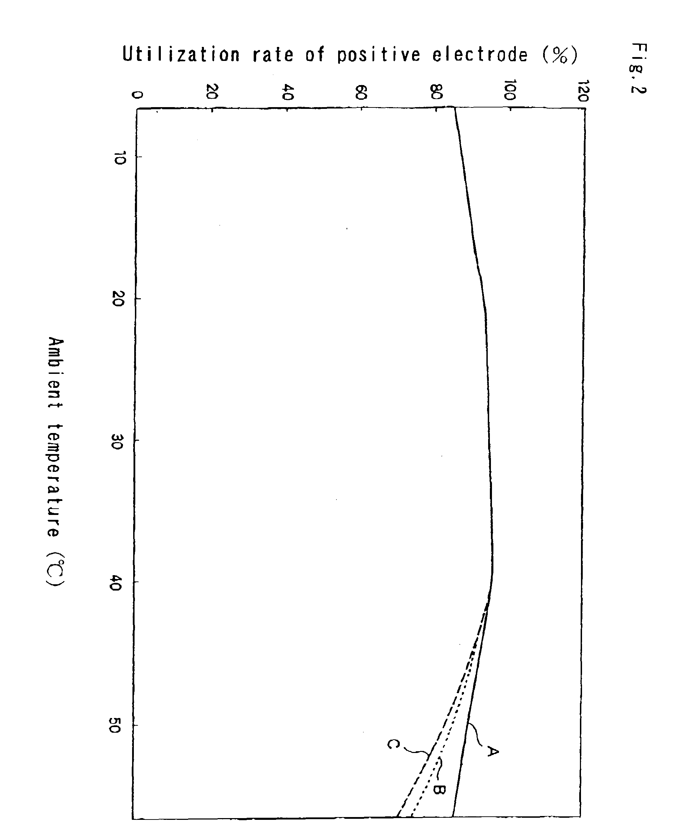

The result is shown in Fig 2. From Fig. 2, it was found that the utilization rate was remarkably improved at a high temperature compared to the case where zinc or yttrium was used in the positive electrode alone according to the present invention. Since the result obtained by using yttrium alone was mostly identical to that obtained by using zinc alone, Battery B was shown as the representative.

### EXAMPLE 2

### [Preparation of Negative Electrode]

To 100 parts by weight of hydrogen storage alloy (MmNi_{3.6}Co_{0.7}Mn_{0.4}Al_{0.3}), 5 parts by weight of binder (polyvinyl alcohol), 1 part by weight of a zinc oxide powder and 1 part by weight of an yttrium oxide powder were mixed. And, the obtained mixture was kneaded with water to give a paste. The paste thus formed was applied onto a punched metal sheet. After being dried and compressed, it was cut into a predetermined size of 0.4 mm thickness, 35 mm width and 160 mm length, thereby preparing a hydrogen storage alloy negative electrode having a theoretical capacity of 1,600 mAh.

The negative electrode obtained as described above was combined with the nickel positive electrode having a theoretical capacity of 1,600, which was prepared by adding 5 parts by weight of a cobalt powder and 5 parts by weight a cobalt hydroxide powder to 100 parts by weight of a spherical powder of nickel hydroxide, kneading the obtained mixture with water to give a paste, filling the paste to a foamed nickel porous substrate having a porosity of 95% and a surface density of 450g/cm², and cutting it into a predetermined size of 0.5 mm thickness, 35 mm width and 110 mm length after being dried and compressed, thereby preparing a similar battery as in Example 1 by using a separator made of a sulfonated polypropylene having a thickness of 0.2 mm. This battery was named Battery D.

A battery prepared in the same manner except that only zinc was contained in the positive electrode was named Battery E. And, a battery prepared in the same manner except that no zinc and yttrium were contained in the negative electrode was named Battery F.

### [Evaluation]

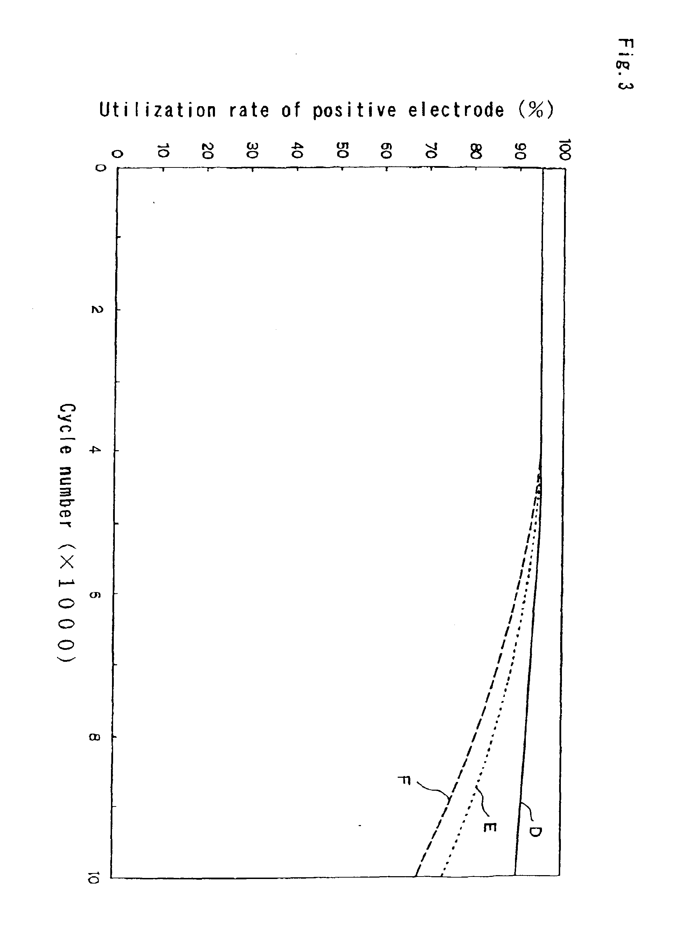

For these batteries, a cycle life test by charging was conducted with a current of 1 C for 1.3 hours and discharging was conducted with a current of 1 C until the voltage dropped to 1.0 V at an ambient temperature of 25 °C. The discharge capacity is shown in Fig. 3 as a capacity ratio to theoretical capacity.

As a result, it was found that the cycle life was remarkably improved compared to the case where zinc or yttrium was used in the negative electrode alone according to the present invention. Since the result obtained by using yttrium alone was mostly identical to that obtained by using zinc alone, Battery E was shown as the representative.

### EXAMPLE 3

### [Preparation of Positive Electrode]

The positive electrode used in this example was prepared in the following manner. To 100 parts by weight of a nickel hydroxide powder, 7 parts by weight of a cobalt powder and 5 parts by weight of cobalt hydroxide were mixed. And, the obtained mixture was kneaded with water to give a paste. The paste thus obtained was filled to a foamed nickel porous substrate having a porosity of 95% and a surface density of 450g/cm². After being dried and compressed, it was cut into a predetermined size of 0.5 mm thickness-, 35 mm width and 110 mm length, thereby preparing nickel positive electrodes having a theoretical capacity of 1,000 mAh.

### [Preparation of Negative Electrode]

Next, the hydrogen storage alloy negative electrode used in this example was prepared in the following manner. To 100 parts by weight of hydrogen storage alloy (MmNi_{3.6}Co_{0.7}Mn_{0.4}Al_{0.3}), water and 5 parts by weight of a binder (polyvinyl alcohol) were mixed to form a paste and the paste was applied onto a punched metal sheet. After being dried and compressed, it was cut into a predetermined size of 0.4 mm thickness, 35 mm width, and 160 mm length, thereby preparing a hydrogen storage alloy negative electrode having a theoretical capacity of 1,600 mAh.

### [Preparation of Separator]

Next, the separator used in this example was prepared in the following manner. A separator made of sulfonated polypropylene having a thickness of 0.2 mm was immersed into a saturated aqueous solution in which zinc sulfate and yttrium hydroxide were dissolved. As a result, zinc ion and yttrium ion were substituted for hydrogen ion in sulfon group or impregnated in a hole in the separator, and thus zinc and yttrium were carried on the separator. Various amounts of zinc and yttrium were carried by varying the period of time for impregnation. The amounts of zinc and yttrium thus carried were determined by ICP emission spectrometry.

The amounts of zinc and yttrium carried on the separator, which are calculated in the state of oxide thereof to the weight of nickel hydroxide, are shown in Table 1.

**Table 1**

| Battery No. | Zn (wt%) | Y (wt%) |
|---|---|---|
| 1 | 0 | 1 |
| 2 | 0.005 | 0.005 |
| 3 | 0.005 | 1 |
| 4 | 0.01 | 0.01 |
| 5 | 0.01 | 1 |
| 6 | 1 | 0 |
| 7 | 1 | 0.005 |
| 8 | 1 | 0.01 |
| 9 | 1 | 1 |
| 10 | 1 | 5 |
| 11 | 1 | 10 |
| 12 | 1 | 11 |
| 13 | 5 | 1 |
| 14 | 10 | 1 |
| 15 | 10 | 10 |
| 16 | 11 | 1 |
| 17 | 11 | 0 |
| 18 | 0 | 11 |

A similar battery as in Example 1 was prepared by combining the positive electrode, the negative electrode and the separator prepared as above.

### [Evaluation]

The utilization rate of the various batteries prepared as above was examined.

After charging was conducted with a current of 0.1 C for 15 hours at an ambient temperature of 25, 35, 45 or 55 °C, each of the batteries was stood still for 3 hours in an ambient temperature of 25 °C. Then, discharging was conducted with a current of 0.2 C until the voltage dropped to 1.0 V.

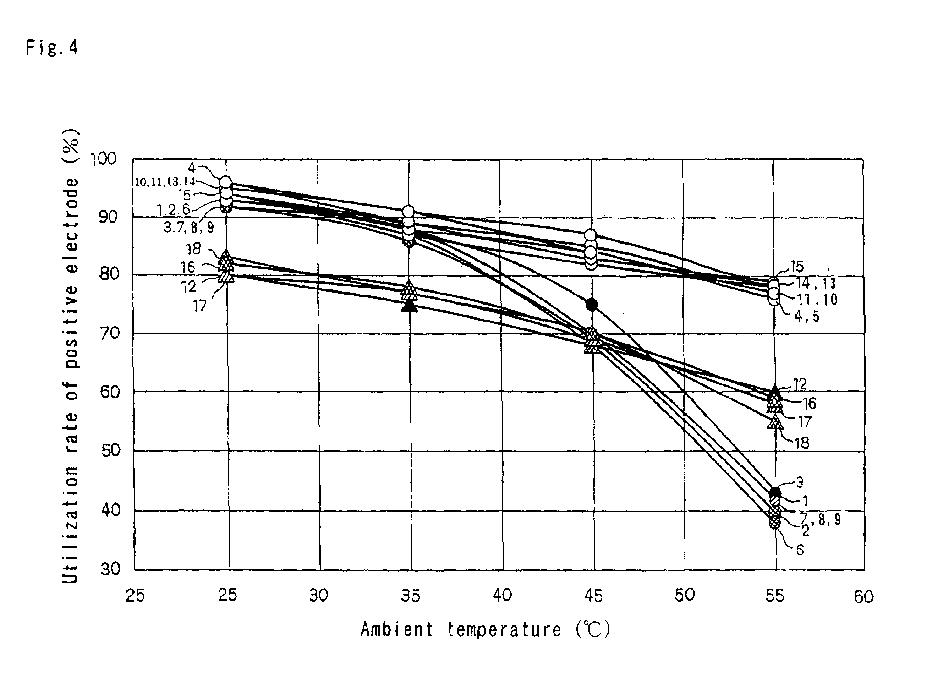

The utilization rate at the second charge/discharge cycle at each ambient temperature of each battery charged and discharged under the above-mentioned conditions is shown in Fig. 4. The utilization rates can be obtained from the following formula:

Utilization rate (%) = discharge capacity (mAh)/theoretical capacity of positive electrode (mAh)

As shown in Fig. 4, it is apparent that the charge efficiency decreases at a high temperature if each of the total amount of zinc element and yttrium element carried in the separator is less than 0.01% by weight of the nickel hydroxide in the positive electrode.

Meanwhile, the utilization rate of the positive electrode starts to decrease at room temperature if each of the amounts of zinc element and yttrium element carried in the separator is more than 10% by weight of the nickel hydroxide in the positive electrode.

As such, by concurrently carrying each of zinc element and yttrium element in the separator within the range from 0.01 to 10% by weight of the nickel hydroxide in the positive electrode, the battery can be used at a high utilization rate in a wide range of ambient temperatures.

After charging was conducted with a current of 0.2 C for 5 hours, a cycle life test was conducted by discharging with a current of 0.5 C until the voltage dropped to 1.0 V.

The batteries with the optimal carrying amounts of zinc and yttrium exhibited stable utilization rates of the positive electrode until the 800th cycle, and the utilization rates are 60% or so even after about 1,000 cycles had elapsed. However, the batteries with the insufficient carrying amounts of the addition showed low utilization rates and early deterioration.

### EXAMPLE 4

The electrolyte used in this example was prepared in the following manner:

First, an alkaline electrolyte was prepared by dissolving lithium hydroxide of 20 g/liter in an aqueous solution of potassium hydroxide having a specific gravity of 1.3. Then, zinc sulfate and yttrium hydroxide were dissolved into the electrolyte such that the electrolyte contained zinc element and rare earth element each in a concentration shown in Table 2. The amounts of zinc and the yttrium dissolved in the electrolyte were determined by ICP emission spectrometry. It is noted that the concentrations in Table 2 are calculated as in the state of oxide thereof to the weight of nickel hydroxide.

**Table 2**

| Battery No. | Zn (wt%) | Y (wt%) |
|---|---|---|
| 19 | 0.005 | 0.005 |
| 20 | 0.005 | 0.01 |
| 21 | 0.01 | 0.005 |
| 22 | 1 | 0.01 |
| 23 | 1 | 0.05 |
| 24 | 1 | 0.1 |
| 25 | 1 | 1 |
| 26 | 1 | 0.01 |
| 27 | 10 | 0.01 |
| 28 | 11 | 0.01 |
| 29 | 11 | 0.005 |

Test batteries were prepared in the same manner as in Example 1 except for the electrolyte by combining the same positive electrode and negative electrode as in Example 3 and using a separator made of sulfonated polypropylene having a thickness of 0.2 mm, and a similar test was conducted.

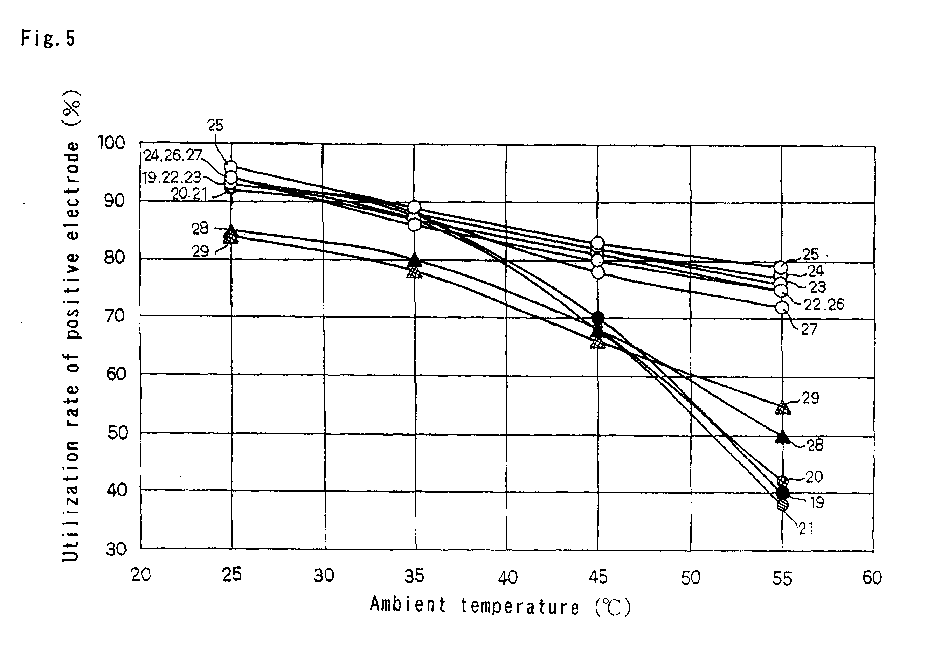

As shown in Fig. 5, it can be found that the charge efficiency decreases at a high temperature if each of the amounts of zinc element and yttrium element in the electrode is less than 0.01% by weight of the nickel hydroxide in the positive electrode. On the other hand, the utilization rate of the positive electrode starts to decrease at room temperature if the amount of zinc element is more than 10% by weight of the nickel hydroxide in the positive electrode.

As such, a battery can be used in a wide range of ambient temperatures if 0.01 to 10% by weight of zinc element and 0.01% by weight or more of yttrium element by weight of the nickel hydroxide in the electrolyte were concurrently added to the negative electrode plate.

A life cycle test was conducted at an ambient temperature of 45 °C in the same manner as in Example 3 and the similar results were obtained.

Zinc oxide and zinc sulfate were used as zinc compound, and yttrium oxide and yttrium hydroxide were used as the rare earth compound in the above example. The similar effect was observed even in the case where metallic zinc, zinc hydroxide, zinc carbonate and zincate ion were used as zinc compound, and erbium compound and ytterbium were used as rare earth compound.

As described hereinabove, the present invention can provide a nickel-metal hydride storage battery with an excellent cycle life which can achieve a high capacity in a wide temperature range.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

The present invention is to provide a nickel-metal hydride storage battery comprising a positive electrode mainly composed of nickel hydroxide, a negative electrode mainly composed of a hydrogen storage alloy powder electrochemically absorbing and desorbing hydrogen. a separator and an alkaline electrolyte, wherein zinc and rare earth clement are contained in at least one selected from the group consisting of the positive electrode, the separator and the electrolyte. Hence, the charge efficiency of nickel hydroxide can bo improved at a high ambient temperature, and furthermore, the deterioration of the negative electrode due to oxidation can be suppressed, thereby enabling a provision of a nickel-metal hydride storage battery with a longer cycle life.

## Claims

1. A nickel-metal hydride storage battery comprising a positive electrode mainly composed of nickel hydroxide, a negative electrode mainly composed of a hydrogen storage alloy powder electrochemically absorbing and desorbing hydrogen, a separator and an alkaline electrolyte,
wherein zinc element and rare earth element are contained in at least one selected from the group consisting of said positive electrode, said separator and said electrolyte.

2. The nickel-metal hydride storage battery in accordance with claim 1,
wherein said zinc is contained in at least one state selected from the group consisting of metallic zinc, zinc hydroxide, zinc oxide, zinc sulfate, zinc carbonate and zincate ion.

3. The nickel-metal hydride storage battery in accordance with claim 1,
wherein said rare earth element is contained in at least one state selected from the group consisting of rare earth metal, rare earth oxide and rare earth hydroxide.

4. The nickel-metal hydride storage battery in accordance with claim 1,
wherein said rare earth metal is yttrium, erbium or ytterbium.

5. The nickel-metal hydride storage battery in accordance with claim 1,
wherein the content of said zinc and said rare earth element, which is calculated in the state of oxide thereof, are 0.01 to 10% by weight of said nickel hydroxide in said positive electrode.

6. The nickel-metal hydride storage battery in accordance with claim 1,
wherein said separator is composed of sulfonated polypropylene.

7. The nickel-metal hydride storage battery in accordance with claim 1,
wherein said electrolyte contains potassium hydroxide, sodium hydroxide and lithium hydroxide.

8. A nickel-metal hydride storage battery comprising a positive electrode mainly composed of nickel hydroxide, a negative electrode mainly composed of a hydrogen storage alloy powder electrochemically absorbing and desorbing hydrogen, a separator and an alkaline electrolyte,
wherein at least one selected from the group consisting of metallic zinc, zinc hydroxide, zinc oxide, zinc sulfate and zinc carbonate; and one selected from the group consisting of rare earth metal, rare earth oxide and rare earth hydroxide is added to said negative electrode.

9. The nickel-metal hydride storage battery in accordance with claim 8,
wherein the amount of addition of said zinc and said rare earth element, which is calculated in the state of oxide thereof, are 0.01 to 10% by weight of said nickel hydroxide in said positive electrode.

10. The nickel-metal hydride storage battery in accordance with claim 8,
wherein said rare earth element is yttrium, erbium or ytterbium.
